# EUROPÄISCHE PATENTSCHRIFT

(11) **EP 2 764 572 B1**
(45) Veröffentlichungstag und Bekanntmachung des Hinweises auf die Patenterteilung: **02.08.2017**
(21) Anmeldenummer: 12768821.6
(22) Anmeldetag: 04.10.2012
(51) Int. Cl.: H01M 10/613, H01M 10/615, H01M 10/617, H01M 10/6556, H01M 10/6568

(54) **THERMISCHE ÜBERGANGSVORRICHTUNG, TEMPERIERPLATTE UND ENERGIESPEICHERVORRICHTUNG**
THERMAL TRANSFER DEVICE, TEMPERATURE-CONTROL PANEL AND ENERGY STORAGE DEVICE
DISPOSITIF DE TRANSFERT THERMIQUE, PLAQUE DE THERMORÉGULATION ET DISPOSITIF D'ACCUMULATION D'ÉNERGIE

(30) Priorität: 04.10.2011 DE 102011084002
(43) Veröffentlichungstag der Anmeldung: 13.08.2014
(73) Patentinhaber: MAHLE Behr GmbH & Co. KG, 70469 Stuttgart (DE)
(72) Erfinder: HIRSCH, Stefan, 70180 Stuttgart (DE); JANZEN, Caroline, 70192 Stuttgart (DE); STRIPF, Matthias, 76133 Karlsruhe (DE); WIEBELT, Achim, 67435 Neustadt (DE)
(74) Vertreter: Grauel, Andreas
(86) Internationale Anmeldenummer: PCT/EP2012/069592
(87) Internationale Veröffentlichungsnummer: WO 2013/050450

(56) Entgegenhaltungen:
- DE-A1-102009 014 954
- US-A1- 2005 074 666
- US-A1- 2011 206 948

## Beschreibung

Die vorliegende Erfindung bezieht sich auf eine thermische Übergangsvorrichtung zum Herstellen eines thermischen Übergangs zwischen einem Energiespeicher und einer Temperierplatte zum Temperieren des Energiespeichers, auf eine Temperierplatte und auf eine Energiespeichervorrichtung.

In modernen Hybrid-Elektro-Fahrzeugen (HEV) oder Elektrofahrzeugen (EV) werden leistungsfähige Energiespeicher, wie zum Beispiel Li-Ionen-Akkumulatoren oder NiMH-Akkumulatoren oder Super-Caps eingesetzt. Bei diesen kommt es beim schnellen Laden und Entladen aufgrund von Widerständen in und außerhalb der Zellen zur Erwärmung. Temperaturen über 50 °C schädigen die Energiespeicher dauerhaft. Um die Funktion der Energiespeicher zu gewährleisten müssen diese aktiv gekühlt werden. Dazu werden die Energiespeicher mit einer Temperierplatte in thermischen Kontakt gebracht. Außerdem ist es bei geringen Außentemperaturen notwendig die Batteriezellen zu beheizen. Für eine maximale elektrische Leistung und eine hohe Lebensdauer der Batterie ist deren homogene Kühlung, bzw. Heizung notwendig, d.h. alle Zellen sollten in jedem Betriebszustand auf demselben Temperaturniveau liegen.

Es ist die Aufgabe der vorliegenden Erfindung eine verbesserte thermische Übergangsvorrichtung zum Herstellen eines thermischen Übergangs zwischen einem Energiespeicher und einer Temperierplatte zum Temperieren des Energiespeichers, eine verbesserte Temperierplatte und eine verbesserte Energiespeichervorrichtung zu schaffen.

Diese Aufgabe wird durch eine thermische Übergangsvorrichtung, eine Temperierplatte und eine Energiespeichervorrichtung gemäß den Hauptansprüchen gelöst.

Um eine maximale Temperaturdifferenz an einer Oberfläche eines Energiespeichers, beispielsweise einer Batteriezelle, über die Zeit möglichst gering zu halten, wird eine Anordnung aus mehreren funktionalen Schichten vorgeschlagen, welche es ermöglichen, den thermischen Widerstand gegenüber der Oberfläche des Energiespeichers gezielt zu beeinflussen. Dadurch kann beispielsweise eine Batteriekühlplatte mit einem lokal angepassten thermischen Interface (La-Thln) realisiert werden.

Ein Beispiel einer lokal angepassten thermischen Isolationsschicht zur Steuerung der Kühlleistung zwischen einem Energiespeicher und einer Temperierplatte ist in US 2011/0206948 A1 beschrieben.

Dadurch ist es nicht mehr erforderlich, eine Temperierplatte, beispielsweise eine Kühlplatte, zur Temperierung eines Energiespeichers mit einem entsprechend hohen Kühlmittelvolumenstrom zu bedienen, so dass der Temperaturgradient im Kühlmittel gering gehalten wird und der Energiespeicher oder Zellen des Energiespeichers homogen gekühlt werden. Verändert sich der thermische Widerstand der Anordnung aus mehreren funktionalen Schichten entlang einer Strömungsrichtung des Kühlmittels, so kann der Kühlmittelvolumenstrom gering gehalten werden, da ein Temperaturgradient im Kühlmittel durch den sich verändernden thermischen Widerstand ausgeglichen werden kann. Indem ein hoher Volumenstrom vermieden werden kann, treten geringe Druckverluste im System auf, so dass die weiteren Komponenten im Kreislauf kleiner dimensioniert werden können, so können zum Beispiel kleine, leichte und kostengünstige Pumpen eingesetzt werden.

Außerdem kann auf komplexe Verspannvorrichtungen, welche den Energiespeicher mit der Temperierplatte gleichmäßig verspannen verzichtet werden. Inhomogenitäten im Anpressdruck beeinflussen den thermischen Widerstand. Je höher der Anpressdruck, desto höher der thermische Widerstand und desto besser wird der Energiespeicher gekühlt. Verändert sich also aufgrund von Inhomogenitäten in der Verspannung der thermische Widerstand der Anordnung können die Unterschiede im thermischen Widerstand durch die Einbringung mehrerer funktionaler Schichten ausgeglichen werden. Dadurch kann auch auf zusätzliche, komplexe Elemente für die Verspannung verzichtet werden.

Vorteilhafterweise kann durch die funktionalen Schichten eine homogene Kühlung bzw. Heizung eines Energiespeichers realisiert werden. Weist der Energiespeicher mehrere Zellen auf, so kann gewährleistet werden, dass alle Zellen in jedem Betriebszustand auf demselben Temperaturniveau liegen.

Die vorliegende Erfindung schafft eine thermische Übergangsvorrichtung zum Herstellen eines thermischen Übergangs zwischen einem Energiespeicher und einer Temperierplatte zum Temperieren des Energiespeichers mit folgenden Merkmalen:
einer thermischen Isolationsschicht aus einem ungleichmäßig über die thermische Isolationsschicht verteilten Isolationsmaterial; und
einer Toleranzausgleichsschicht aus einem kompressiblen Material zum Ausgleichen unterschiedlicher Materialstärken der thermischen Isolationsschicht, wobei die thermische Isolationsschicht vorzugsweise benachbart zu der Toleranzausgleichsschicht angeordnet ist.

Die Toleranzausgleichsschicht ist ferner zum Ausgleich der fertigungsbedingten Toleranzen der Zellen im Energiespeicher geeignet. Bei den Toleranzen handelt es sich um Höhentoleranzen der Zellen untereinander und Toleranzen oder Unebenheiten auf dem Zellboden.

Bei dem Energiespeicher kann es sich um eine Batterie, wie zum Beispiel einen Li-Ionen- oder NiMH-Akkumulator oder einen Super-Cap handeln. Der Energiespeicher kann mehrere Batteriezellen umfassen. Der Energiespeicher kann zum Betrieb eines Hybrid-Elektro-Fahrzeugs oder eines Elektrofahrzeugs geeignet sein. Die Temperierplatte kann als Wärmequelle oder Wärmesenke fungieren. Die Temperierplatte kann demnach zur Erwärmung oder Kühlung des Energiespeichers eingesetzt werden. Die Temperierplatte kann einen oder mehrere Kanäle zum Führen eines Fluids, beispielsweise eines Kühlmittels, aufweisen. Die thermische Übergangsvorrichtung kann zwischen einer Oberfläche der Temperierplatte und einer Oberfläche des Energiespeichers angeordnet werden. Die thermische Übergangsvorrichtung ist somit geeignet, um eine flächige Verbindung zwischen der Temperierplatte und dem Energiespeicher herzustellen. Die thermische Übergangsvorrichtung kann auch zwischen einer Oberfläche der Temperierplatte und einer Oberfläche einer Heizvorrichtung angeordnet werden. Somit kann die Übergangsvorrichtung unterhalb der Temperierplatte angeordnet werden, z.B. wenn sich die Heizvorrichtung unterhalb der Temperierplatte befindet. Dabei kann je nach Ausführung sowohl die thermische Isolationsschicht als auch die Toleranzausgleichsschicht auf der dem Energiespeicher zugewandten Seite der thermischen Übergangsvorrichtung angeordnet sein. Die thermische Isolationsschicht kann ausschließlich aus dem Isolationsmaterial bestehen. Ungleichmäßig verteilt bedeutet erfindungsgemäß in Bezug auf die thermische Isolationsschicht, dass die Materialstärke des Isolationsmaterials und somit der gesamten thermischen Isolationsschicht über eine Haupterstreckungsfläche der thermischen Isolationsschicht variiert. Auf diese Weise kann die thermische Isolationsschicht unterschiedliche Dicken aufweisen. Eine Materialstärke des Isolationsmaterials kann in einem oder mehreren Bereichen der thermischen Isolationsschicht gleich Null sein. In diesem Fall kann die thermische Isolationsschicht in dem Bereich oder den Bereichen kein Isolationsmaterial umfassen. Somit kann auch eine Dicke der thermischen Isolationsschicht in dem Bereich oder den Bereichen gleich Null sein. Die thermische Isolationsschicht kann aus einem starren oder in Bezug auf eine zwischen dem Energiespeicher und der Temperierplatte herrschenden Anpresskraft inkompressiblen Material bestehen. Die Toleranzausgleichsschicht kann aus einem anderen Material als die thermische Isolationsschicht bestehen. Die Toleranzausgleichsschicht kann eine höhere Wärmeleitfähigkeit als die thermische Isolationsschicht aufweisen. Beispielsweise kann die Wärmeleitfähigkeit der Toleranzausgleichsschicht mindestens vier oder fünfmal so groß wie die Wärmeleitfähigkeit der thermischen Isolationsschicht sein. Kompressibles Material kann in Bezug auf die Toleranzausgleichsschicht bedeuten, dass sich das Material aufgrund einer in Bezug auf eine zwischen dem Energiespeicher und der Temperierplatte herrschenden Anpresskraft verformen kann. Auf diese Weise können unterschiedliche Dicken der thermischen Isolationsschicht sowie Toleranzen der Zellen im Energiespeicher untereinander ausgeglichen werden. Zumindest ein Teil der Toleranzausgleichsschicht kann in die thermische Isolationsschicht eingreifen. Insbesondere können Bereiche der thermischen Isolationsschicht, die wenig oder kein Isolationsmaterial aufweisen, durch das kompressible Material der Toleranzausgleichsschicht ausgeglichen werden.

Dabei kann die Toleranzausgleichsschicht aus einem kompressiblen Material ausgebildet sein, wobei das kompressible Material als Klebung mittels eines Klebers oder als Vergussmasse vorgesehen sein kann.

Die thermische Isolationsschicht kann benachbart zu der Toleranzausgleichsschicht angeordnet sein. Die thermische Isolationsschicht und die Toleranzausgleichsschicht können stapelförmig angeordnet sein und direkt aneinandergrenzen. Somit kann sich die Toleranzausgleichsschicht auch über Bereiche der thermischen Isolationsschicht erstrecken, die eine maximale Materialstärke des Isolationsmaterials aufweisen. Durch die benachbarte Anordnung können Toleranzen der thermischen Isolationsschicht gut durch die Toleranzausgleichsschicht ausgeglichen werden.

Die thermische Isolationsschicht kann eine Wärmeleitfähigkeit von weniger als 0,6 W/mK aufweisen. Gemäß unterschiedlichen Ausführungsformen kann die thermische Isolationsschicht auch eine Wärmeleitfähigkeit von beispielsweise weniger als 0,4 W/mK, 0,3 W/mK, 0,2 W/mK oder 0,1 W/mK aufweisen. Insbesondere kann das Isolationsmaterial der thermischen Isolationsschicht die genannte Wärmeleitfähigkeit aufweisen. Durch die geringe Wärmeleitfähigkeit des Isolationsmaterials kann der Wärmewiderstand der thermischen Isolationsschicht durch eine gezielte Verteilung des Isolationsmaterials über die thermische Isolationsschicht an bestimmten Bereichen erhöht werden.

Dabei kann die Toleranzausgleichsschicht eine Wärmeleitfähigkeit von mehr als 0,7 W/mK aufweisen. Gemäß unterschiedlichen Ausführungsformen kann die Toleranzausgleichsschicht auch eine Wärmeleitfähigkeit von beispielsweise mehr als 1,0 W/mK, 1,3 W/mK, 1,6 W/mK oder 1,9 W/mK aufweisen. Insbesondere kann das Material der Toleranzausgleichsschicht die genannte Wärmeleitfähigkeit aufweisen. Durch die hohe Wärmeleitfähigkeit des Materials der Toleranzausgleichsschicht ist eine gute Wärmeübertragung zwischen der Temperierplatte und dem Energiespeicher möglich.

Die thermische Isolationsschicht kann eine maximale Materialstärke von weniger als 600 µm aufweisen. Gemäß unterschiedlichen Ausführungsformen kann die thermische Isolationsschicht auch eine maximale Materialstärke von weniger als 400 µm oder 200 µm aufweisen. Durch die geringe Dicke wird der Wärmestrom zwischen der Temperierplatte und dem Energiespeicher nur geringfügig eingeschränkt.

Die Toleranzausgleichsschicht kann eine Materialstärke aufweisen, die zwischen 0,3 mm und 2 mm liegt. Die Toleranzausgleichsschicht kann beispielsweise eine Materialstärke aufweisen, die größer als die maximale Materialstärke der thermischen Isolationsschicht und kleiner als das Vierfache, das Fünffache oder das Sechsfache der maximalen Materialstärke der thermische Isolationsschicht sein. Dadurch können die unterschiedlichen Stärken der thermischen Isolationsschicht gut durch die Toleranzausgleichsschicht ausgeglichen werden.

Die thermische Isolationsschicht kann einen ersten Bereich mit einer ersten Materialstärke, einen zweiten Bereich mit einer zweiten Materialstärke und einen dritten Bereich mit einer dritten Materialstärke aufweisen. Dabei kann der zweite Bereich zwischen dem ersten und dem dritten Bereich angeordnet sein. Die erste Materialstärke kann größer als die zweite Materialstärke und die zweite Materialstärke kann größer als die dritte Materialstärke sein. Auch kann zum Beispiel die Materialstärke des dritten Bereiches dünner als die Materialstärke des ersten Bereiches sein. Der erste, zweite und dritte Bereich können entlang einer Strömungsrichtung oder einer Strömungsweglänge eines Fluids innerhalb der Temperierplatte angeordnet sein. Auch können der erste, zweite und dritte Bereich parallel zu einer Strömungsrichtung oder einer Strämungsweglänge des Fluids innerhalb der Temperierplatte angeordnet sein, wenn Unterschiede im Anpressdruck auszugleichen sind. Der erste Bereich kann dabei in Bezug auf die Strömungsrichtung stromaufwärts und der dritte Bereich in Bezug auf die Strömungsrichtung stromabwärts angeordnet sein. Die Strömungsrichtung kann beispielsweise für einen Kühlbetrieb der Temperierplatte gelten. Die Materialstärke kann sich zwischen einer maximalen Materialstärke in dem ersten Bereich und einer minimalen Materialstärke in dem dritten Bereich kontinuierlich verringern. Dabei ist es nicht erforderlich, dass sich die Materialstärke immer kontinuierlich, bzw. linear verringert. Die Verringerung der Materialstärke kann auch exponentiell sein. Oder, wie oben beschrieben kann es sein, dass zum Beispiel der dritte Bereich wieder eine größere Dicke aufweist als der zweite Bereich.
Auf diese Weise können unterschiedliche Wärmewiderstände der thermischen Übergangsvorrichtung über unterschiedliche Dicken der thermischen Isolationsschicht realisiert werden.

Die thermische Isolationsschicht kann einen ersten Abschnitt und einen zweiten Abschnitt aufweisen. Dabei kann das Isolationsmaterial ausschließlich in dem ersten Abschnitt angeordnet sein. In dem zweiten Abschnitt ist somit kein Isolationsmaterial vorhanden. Die Dicke der thermischen Isolationsschicht kann in dem zweiten Abschnitt gleich Null betragen. In dem ersten Abschnitt kann die thermische Isolationsschicht das Isolationsmaterial in einer konstanten oder einer veränderlichen Materialstärke aufweisen. Die Toleranzausgleichsschicht kann in den zweiten Abschnitt hineinragen. Die Toleranzausgleichsschicht kann sowohl eine Mehrzahl erster Abschnitte als auch eine Mehrzahl zweiter Abschnitte aufweisen. Der erste Abschnitt kann durch eine Mehrzahl von Aussparungen in dem zweiten Abschnitt gebildet sein, oder umgekehrt. Die Aussparungen können beispielsweise rund, oval, rechteckig, dreieckig, sechseckig oder streifenförmig sein. Eine Größe oder ein Durchmesser der Mehrzahl von Aussparungen kann sich entlang der Strömungsrichtung verändern. Die ersten und die zweiten Abschnitte können in der Strömungsrichtung oder quer zur Strömungsrichtung abwechselnd angeordnet sein. Ein Flächenanteil des ersten Abschnitts in Bezug zu einem Flächenanteil des zweiten Abschnitts an der thermischen Isolationsschicht kann sich entlang der Strömungsrichtung verändern. Die Veränderung kann auch parallel dazu sein, beispielsweise wenn Unterschiede im Anpressdruck auszugleichen sind. Auf diese Weise können unterschiedliche Wärmewiderstände der thermischen Übergangsvorrichtung über das Vorhandensein und Nichtvorhandensein des Isolationsmaterials innerhalb der thermischen Isolationsschicht realisiert werden.

Die thermische Übergangsvorrichtung kann eine elektrische Isolationsschicht aufweisen. Die elektrische Isolationsschicht kann benachbart zu der Toleranzausgleichsschicht oder benachbart zu der thermischen Isolationsschicht angeordnet sein. Die thermische Übergangsvorrichtung kann somit einen stapelförmigen Aufbau aufweisen, der zumindest die Toleranzausgleichsschicht, die thermische Isolationsschicht und die elektrische Isolationsschicht umfasst.

Durch die elektrische Isolationsschicht kann eine elektrische Isolierung zwischen der Temperierplatte und dem Energiespeicher realisiert werden.

Die thermische Übergangsvorrichtung kann eine Heizschicht aufweisen. Die Heizschicht kann benachbart zu der Toleranzausgleichsschicht oder benachbart zu der thermischen Isolationsschicht angeordnet sein. Die thermische Übergangsvorrichtung kann somit einen stapelförmigen Aufbau aufweisen, der zumindest die Toleranzausgleichsschicht, die thermische Isolationsschicht und die Heizschicht umfasst. Durch einen Betrieb der Heizschicht kann die thermische Übergangsvorrichtung erwärmt werden. Die Heizschicht kann ausgebildet sein, um elektrische Energie in Wärme umzuwandeln. Je nach Ausführungsform der Heizschicht kann die Heizschicht zusätzlich oder alternativ ausgebildet sein, um die thermische Übergangsvorrichtung zu kühlen. Beispielsweise kann die Heizschicht Heizwiderstände oder Peltier-Elemente umfassen.

Die vorliegende Erfindung schafft ferner eine Temperierplatte zum Temperieren eines Energiespeichers, mit folgenden Merkmalen:
einer Strömungskanalschicht, die zumindest einen Strömungskanal zum Führen eines Fluids aufweist; und
einer thermischen Übergangsvorrichtung, die mit der Strömungskanalschicht stapelförmig verbunden ist.

Die vorliegende Erfindung schafft ferner eine Energiespeichervorrichtung, mit folgenden Merkmalen:
einer Temperierplatte; und
einem Energiespeicher der auf einer Oberfläche der thermischen Übergangsvorrichtung der Temperierplatte angeordnet ist.

Somit kann der erfindungsgemäße Ansatz vorteilhaft zur Temperierung eines Energiespeichers eingesetzt werden.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Darstellung einer Energiespeichervorrichtung;
- Fig. 2: ein Diagramm bezüglich des thermischen Widerstands;
- Fig. 3: ein Diagramm bezüglich der Zelltemperatur;
- Fig. 4: eine Darstellung einer Energiespeichervorrichtung;
- Fig. 5: eine Darstellung einer Temperierplatte mit thermischer Übergangsvorrichtung;
- Fig. 6: eine Darstellung einer thermischen Übergangsvorrichtung;
- Fig. 7: eine Darstellung einer thermischen Übergangsvorrichtung;
- Fig. 8: eine Darstellung einer thermischen Übergangsvorrichtung; und
- Fig. 9: eine Darstellung einer thermischen Übergangsvorrichtung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

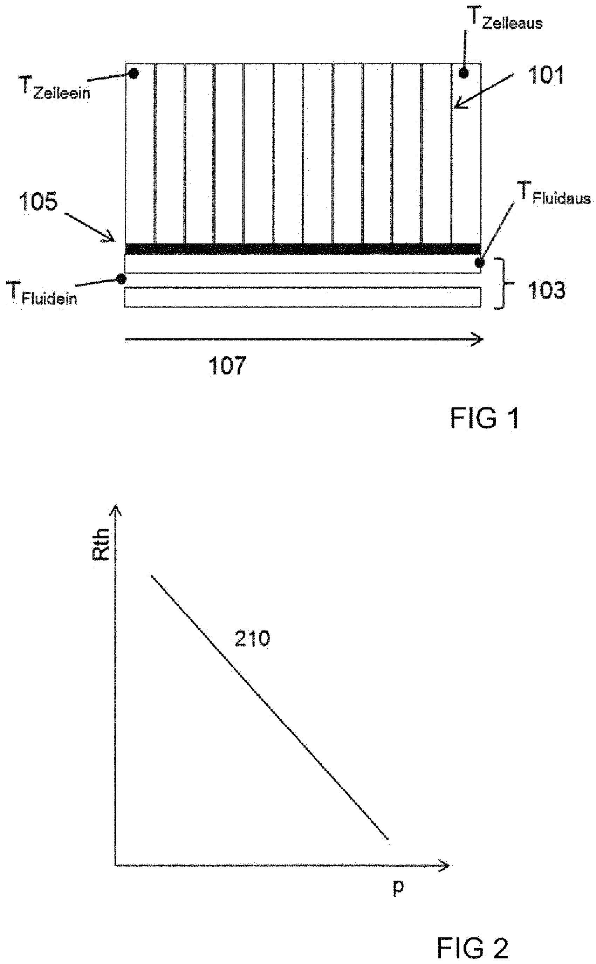

Fig. 1 zeigt eine Querschnittsdarstellung einer Energiespeichervorrichtung gemäß einem Ausführungsbeispiel der vorliegenden Erfindung. Die Energiespeichervorrichtung weist einen Energiespeicher in Form von Batteriezellen 101, eine Temperierplatte in Form einer Kühlplatte 103 mit zumindest einem Strömungskanal und einer zwischen den Batteriezellen 101 und der Kühlplatte 103 angeordneten thermischen Übergangsvorrichtung 105 in Form von funktionalen Schichten auf.

Die Batteriezellen 101 sind nebeneinander auf einer Oberfläche einer äußeren der funktionalen Schichten der Übergangsvorrichtung 105 angeordnet. Im Betrieb der Energiespeichervorrichtung kann ein Fluid durch den Strömungskanal der Kühlplatte 103 strömen. Eine Strömungsweglänge 107 oder Strömungsrichtung des Fluids zwischen einem Eintritt und einem Austritt des Strömungskanals ist durch einen Pfeil gekennzeichnet. Am Eintritt weist das Fluid eine Temperatur T_{Fluidein} auf. Am Austritt weist das Fluid eine Temperatur T_{Fluidaus} auf. Eine dem Eintritt am nächsten gelegene der Batteriezellen 101 weist eine Temperatur T_{Zelleein} auf. Eine dem Austritt am nächsten gelegene der Batteriezellen 101 weist eine Temperatur T_{Zelleaus} auf.

Fig. 2 zeigt ein Diagramm bezüglich eines Verlaufs 210 des thermischen Widerstands der in Fig. 1 gezeigten thermischen Übergangsvorrichtung in Form der funktionalen Schichten. Auf der Abszisse ist der aus der Verspannvorrichtung resultierende Anpressdruck p zwischen den Batteriezellen und der Kühlplatte aufgetragen. Auf der Ordinate ist der thermische Widerstand Rth aufgetragen. Es besteht gemäß diesem Ausführungsbeispiel ein linearer Zusammenhang zwischen dem Anpressdruck und dem thermischen Widerstand, wobei der thermischen Widerstand mit steigendem Anpressdruck abnimmt. Der Zusammenhang kann auch nicht linear sein.

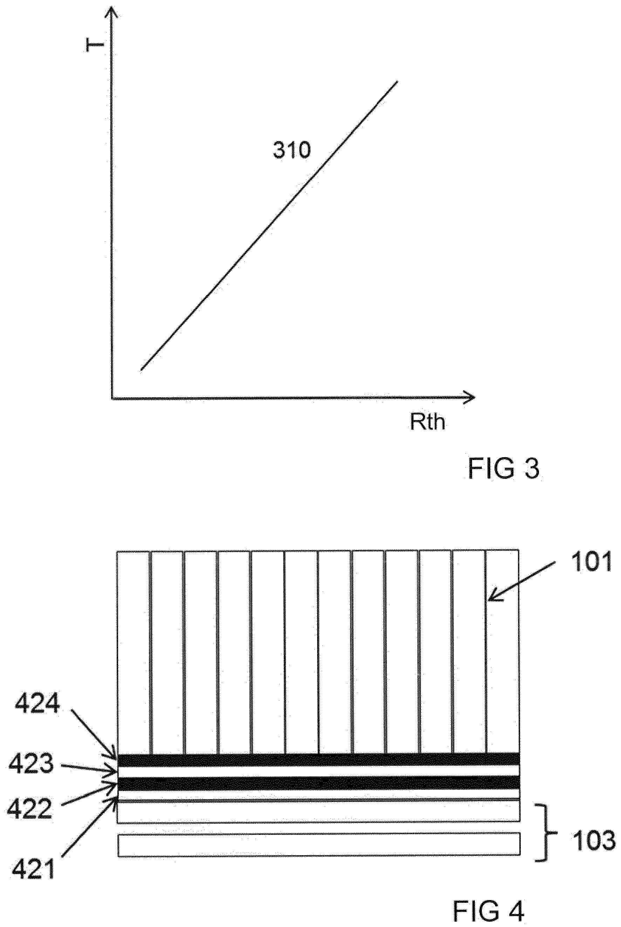

Fig. 3 zeigt ein Diagramm bezüglich eines Verlaufs 310 der Zelltemperatur der in Fig. 1 gezeigten Batteriezellen. Auf der Abszisse ist der thermische Widerstand Rth zwischen den Batteriezellen und der Kühlplatte aufgetragen. Auf der Ordinate ist die Zelltemperatur T aufgetragen. Es besteht ein linearer Zusammenhang zwischen dem thermischen Widerstand Rth und der Zelltemperatur, wobei die Zelltemperatur mit steigendem thermischen Widerstand Rth zunimmt.

Fig. 4 zeigt eine Querschnittsdarstellung einer Energiespeichervorrichtung gemäß einem Ausführungsbeispiel der vorliegenden Erfindung. Die Energiespeichervorrichtung weist entsprechend zu der in Fig. 1 gezeigten Energiespeichervorrichtung einen Energiespeicher in Form von Batteriezellen 101, eine Temperierplatte in Form einer Kühlplatte 103 mit zumindest einem Strömungskanal und einer zwischen den Batteriezellen 101 und der Kühlplatte 103 angeordneten thermischen Übergangsvorrichtung, die eine Mehrzahl funktionaler Schichten 421, 422, 423, 424 aufweist. Die funktionalen Schichten 421, 422, 423, 424 sind übereinandergestapelt angeordnet, wobei sich benachbart angeordnete Schichten 421, 422, 423, 424 jeweils berühren. Die thermische Übergangsvorrichtung weist eine elektrische Isolation 421, eine Heizschicht 422, eine thermische Isolationsschicht 423 und eine Toleranzausgleichsschicht 424 auf. Die elektrische Isolation 421 ist direkt angrenzend zu der Kühlplatte 103 angeordnet. Die Toleranzausgleichsschicht 424 ist direkt angrenzend zu den Batteriezellen 101 angeordnet. Bei dem in Fig. 4 gezeigten Schichtaufbau handelt es sich um einen möglichen Schichtaufbau, der nicht maßstäblich dargestellt ist. Auch kann eine Reihenfolge der Schichten 421, 422, 423, 424 geändert werden. Ferner können einzelne der Schichten 421, 422, 423, 424 entfallen oder durch andere geeignete Schichten ersetzt oder ergänzt werden.

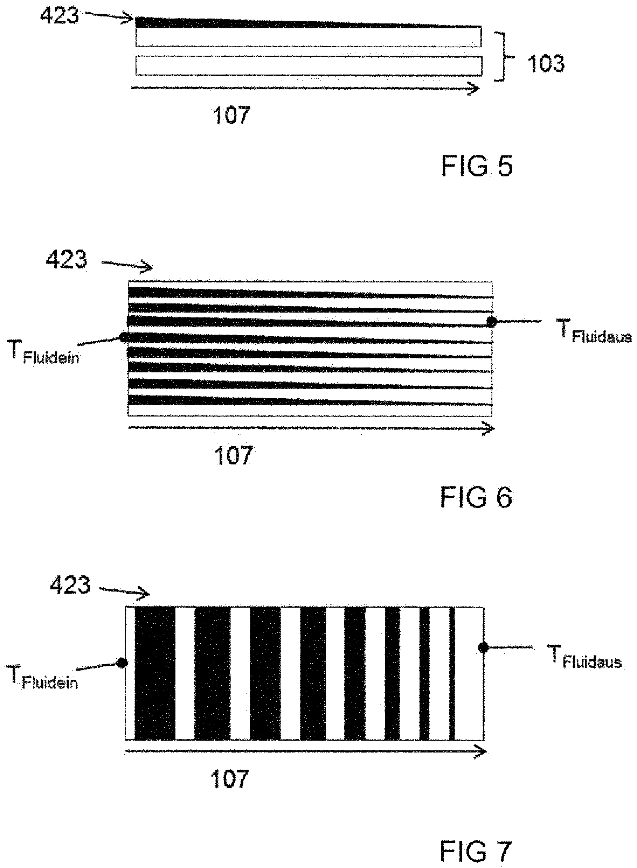

Fig. 5 zeigt eine Querschnittsdarstellung einer Temperierplatte 103 auf der eine thermische Isolationsschicht 423 einer thermischen Übergangsvorrichtung angeordnet ist. Die Temperierplatte 103 kann wie anhand von Fig. 1 beschrieben ausgeführt sein. Die thermische Übergangsvorrichtung kann weitere Schichten, wie anhand von Fig. 4 beschrieben, aufweisen. Die thermische Isolationsschicht 423 ist keilförmig ausgeführt. Die thermische Isolationsschicht 423 weist entlang der Strömungsweglänge 107 ausgehend von einer maximalen Dicke im Bereich des Eintritts des Fluids in den Strömungskanal eine gleichmäßig abfallende Dicke bis zu einer minimalen Dicke im Bereich des Austritts des Fluids auf. Die unterschiedliche Dicke der thermischen Isolationsschicht 423 kann durch Material einer Toleranzausgleichsschicht ausgeglichen werden. Die Darstellung ist nicht maßstäblich.

Fig. 6 zeigt eine Draufsicht auf eine thermische Isolationsschicht 423 einer thermischen Übergangsvorrichtung gemäß einem Ausführungsbeispiel der vorliegenden Erfindung. Die thermische Übergangsvorrichtung kann weitere Schichten, wie anhand von Fig. 4 beschrieben, aufweisen. Die thermische Isolationsschicht 423 kann direkt oder getrennt durch eine oder mehrere weitere Schichten der thermischen Übergangsvorrichtung auf einer Temperierplatte angeordnet sein. In der in Fig. 6 gezeigten Draufsicht ist die Temperierplatte durch die thermische Isolationsschicht 423 verdeckt. Die thermische Isolationsschicht 423 weist einen variablen Flächenanteil auf, wobei die Darstellung in Fig. 6 nicht maßstäblich ist. Die thermische Isolationsschicht 423 weist quer zur Strömungsweglänge 107 eine Mehrzahl von nebeneinander angeordneten Streifen auf, die sich in Richtung der Strömungsweglänge verjüngen. Die Streifen sind dreieckförmig ausgeformt. Die Streifen können durch ein geeignetes Isolationsmaterial gebildet sein. Zwischenräume zwischen den Streifen können durch Material einer Toleranzausgleichsschicht ausgefüllt sein.

Fig. 7 zeigt eine Draufsicht auf eine thermische Isolationsschicht 423 einer thermischen Übergangsvorrichtung gemäß einem Ausführungsbeispiel der vorliegenden Erfindung. Die thermische Übergangsvorrichtung kann weitere Schichten, wie anhand von Fig. 4 beschrieben, aufweisen. Die thermische Isolationsschicht 423 kann direkt oder getrennt durch eine oder mehrere weitere Schichten der thermischen Übergangsvorrichtung auf einer Temperierplatte angeordnet sein. In der in Fig. 7 gezeigten Draufsicht ist die Temperierplatte durch die thermische Isolationsschicht 423 verdeckt. Die thermische Isolationsschicht 423 weist einen variablen Flächenanteil auf, wobei die Darstellung in Fig. 7 nicht maßstäblich ist. Die thermische Isolationsschicht 423 weist entlang der Strömungsweglänge 107 eine Mehrzahl von nebeneinander angeordneten und quer zur Strömungsweglänge 107 ausgerichteten Streifen auf, die in Richtung der Strömungsweglänge schmäler werden. Die Streifen sind gerade ausgeformt. Die Streifen können durch ein geeignetes Isolationsmaterial gebildet sein. Zwischenräume zwischen den Streifen können durch Material einer Toleranzausgleichsschicht ausgefüllt sein.

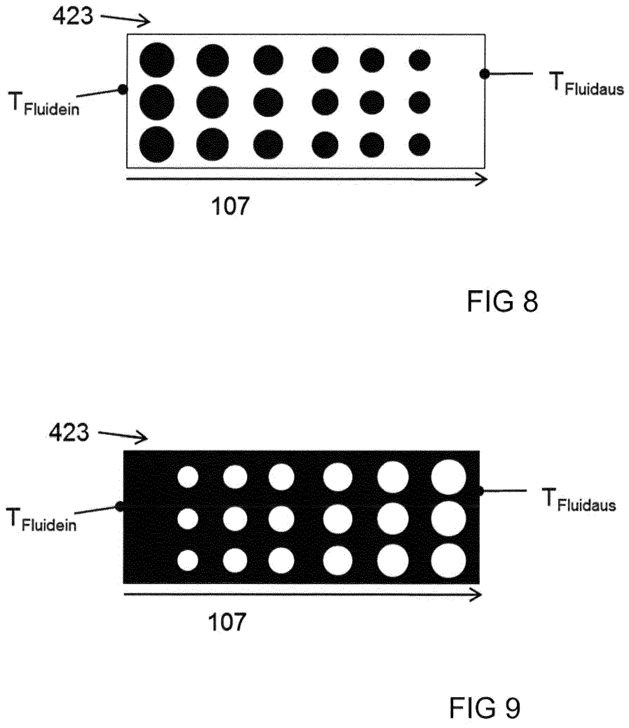

Fig. 8 zeigt eine Draufsicht auf eine thermische Isolationsschicht 423 einer thermischen Übergangsvorrichtung gemäß einem Ausführungsbeispiel der vorliegenden Erfindung. Die thermische Übergangsvorrichtung kann weitere Schichten, wie anhand von Fig. 4 beschrieben, aufweisen. Die thermische Isolationsschicht 423 kann direkt oder getrennt durch eine oder mehrere weitere Schichten der thermischen Übergangsvorrichtung auf einer Temperierplatte angeordnet sein. In der in Fig. 8 gezeigten Draufsicht ist die Temperierplatte durch die thermische Isolationsschicht 423 verdeckt. Die thermische Isolationsschicht 423 weist einen variablen Flächenanteil auf, wobei die Darstellung in Fig. 8 nicht maßstäblich ist. Die thermische Isolationsschicht 423 weist eine Mehrzahl von einzelnen Flächen aus Isolationsmaterial auf. Die einzelnen Flächen sind in einer Mehrzahl von Reihen und Spalten angeordnet. Die Reihen verlaufen in Richtung der Strömungsweglänge und die Spalten quer dazu. Die in einer Spalte angeordneten einzelnen Flächen weisen jeweils die gleiche Größe auf. Gemäß diesem Ausführungsbeispiel weisen einzelne Flächen in benachbarten Spalten jeweils unterschiedliche Größen auf, wobei die Größe der einzelnen Flächen in Richtung der Strömungsweglänge 107 abnimmt. Die Größenverteilung der Flächen kann jedoch auch andersartig sein. Gemäß diesem Ausführungsbeispiel sind die einzelnen Flächen beispielhaft jeweils als Kreise ausgebildet, wobei auch andere Geometrien möglich sind. Die einzelnen Flächen können durch ein geeignetes Isolationsmaterial gebildet sein. Zwischenräume zwischen den einzelnen Flächen können durch Material einer Toleranzausgleichsschicht ausgefüllt sein.

Fig. 9 zeigt eine Draufsicht auf eine thermische Isolationsschicht 423 einer thermischen Übergangsvorrichtung gemäß einem Ausführungsbeispiel der vorliegenden Erfindung. Die thermische Übergangsvorrichtung kann weitere Schichten, wie anhand von Fig. 4 beschrieben, aufweisen. Die thermische Isolationsschicht 423 kann direkt oder getrennt durch eine oder mehrere weitere Schichten der thermischen Übergangsvorrichtung auf einer Temperierplatte angeordnet sein. In der in Fig. 9 gezeigten Draufsicht ist die Temperierplatte durch die thermische Isolationsschicht 423 verdeckt. Die thermische Isolationsschicht 423 weist einen variablen Flächenanteil auf, wobei die Darstellung in Fig. 9 nicht maßstäblich ist. Die thermische Isolationsschicht 423 weist eine Fläche aus Isolationsmaterial auf. In der Fläche aus Isolationsmaterial sind eine Mehrzahl von Aussparungen angeordnet. Die einzelnen Aussparungen sind in einer Mehrzahl von Reihen und Spalten angeordnet. Die Reihen verlaufen in Richtung der Strömungsweglänge und die Spalten quer dazu. Die in einer Spalte angeordneten Aussparungen weisen hier beispielhaft jeweils die gleiche Größe auf. Einzelne Aussparungen in benachbarten Spalten weisen jeweils unterschiedliche Größen auf, wobei die Größe der einzelnen Aussparungen in Richtung der Strömungsweglänge 107 zunimmt. Gemäß diesem Ausführungsbeispiel sind die einzelnen Aussparungen jeweils als Kreise ausgebildet. Die Aussparungen können durch Material einer Toleranzausgleichsschicht ausgefüllt sein.

Im Folgenden werden anhand der Figuren 1 bis 9 Ausführungsbeispiele der vorliegenden Erfindung detailliert beschrieben.

Durch die Kombination aus einer thermischen Isolationsschicht 423 und einer Toleranzausgleichsschicht 424 kann ein Ausgleich einer Temperaturinhomogenität entlang der Strömungsweglänge 107 eines Strömungskanals einer Kühlplatte 103 geschaffen werden.

Die Temperaturinhomogenität kann durch ein Design der Kühlplatte 103 bedingt sein. Wie anhand von Fig. 1 gezeigt, erwärmt sich das Fluid über die Strömungsweglänge 107, wodurch ein Temperaturgradient im Kühlmittel entsteht. Es gilt dabei, dass die Temperatur T_{Fluidaus} größer als die Temperatur T_{Fluidein} ist.

Dies hat zur Folge, dass die Batteriezellen 101 ungleichmäßig gut gekühlt werden. So werden Zellen 101 zu Beginn der Strömungsweglänge 107 besser und gegen Ende der Strömungsweglänge 107 schlechter gekühlt. Somit ist die Temperatur T_{Zelleaus} größer als die Temperatur T_{Zelleein}. Dadurch ergibt sich eine Temperaturinhomogenität über die Batteriezellen 101.

Die Temperaturinhomogenität kann auch durch eine Vorrichtung bedingt sein, welche die Zellen 101 in thermischen Kontakt mit der Kühlplatte 103 bringt. So können die Zellen 101 in einem gewissen Bereich ungleichmäßig an die Kühlplatte 103 angepresst werden. Dabei ist der thermische Widerstand Rₜₕ abhängig vom Anpressdruck. Wie in den Figuren 2 und 3 gezeigt, gilt, je größer der Anpressdruck, desto geringer der thermische Widerstand, desto besser werden die Zellen gekühlt. Dies führt zu einer Temperaturinhomogenität.

Die thermische Übergangsvorrichtung 105, die zumindest die thermische Isolationsschicht 423 und die Toleranzschicht 424 umfasst, ermöglicht eine gezielte, lokale Anpassung des thermischen Interfaces zu den Batteriezellen 101. Wie anhand von Fig. 4 beschrieben können dazu mehrere funktionale Schichten 421, 422, 423, 424 eingesetzt werden, die in unterschiedlicher Reihenfolge angeordnet werden können.

Im Folgenden werden die funktionalen Schichten 421, 422, 423, 424 detailliert beschrieben.

Als erste Schicht kann die elektrische Isolation 421 eingesetzt werden. Die elektrische Isolationsschicht 421 ist optional. Als elektrische Isolation 421 können beispielsweise eine KTL-Beschichtung (kathodische Tauchlackierung), sonstige Lackierungen, Eloxal oder eine geeignete Folie eingesetzt werden.

Als zweite Schicht kann die thermische Isolationsschicht 423 eingesetzt werden. Die thermische Isolationsschicht 423 ist typischerweise kleiner als 300 µm, inkompressibel und weist vorzugsweise eine Wärmeleitfähigkeit kleiner als 0,3 W/mK auf.

Gemäß einem Ausführungsbeispiel weist die thermische Isolationsschicht 423 eine ortsabhängige Variabilität in der Dicke auf, wie es in Fig. 5 gezeigt ist. Die Abnahme der Dicke erfolgt in Strömungsweglänge 107. Dies ist, wie oben beschrieben, jedoch nicht zwingend. Für den Ausgleich des unterschiedlichen Anpressdruckes ergibt sich eine zunehmende Dicke mit steigendem Anpressdruck. Die abnehmende Dicke führt zu einer Abnahme des thermischen Widerstandes, was wiederum zu einer besseren Zellkühlung führt. Die thermische Isolationsschicht 423 kann beispielsweise durch Spraycoating mit unterschiedlichen Beschichtungszeiten oder durch Klebebänder realisiert werden. Bei der Verwendung eines Klebebands kann eine gestapelte Anordnung mehrerer Klebebänder, ein variabel gestrecktes Klebeband, das z. B. über ein Rolle gezogen ist, eine Tauchbeschichtung oder ein Klebeband mit unterschiedlicher Dicke eingesetzt werden.

Gemäß einem Ausführungsbeispiel ist die thermische Isolationsschicht 423 ortsabhängig strukturiert, weist also einen variablen Flächenanteil auf, wie es in den Figuren 6 bis 9 gezeigt ist. Hier erfolgt eine Abnahme des Flächenanteils in Strömungsweglänge. Dies ist, wie oben beschrieben, jedoch nicht zwingend. Für den Ausgleich des unterschiedlichen Anpressdruckes ergibt sich eine zunehmende Dicke mit steigendem Anpressdruck. Ein geringerer Flächenanteil führt zu einer Abnahme des thermischen Widerstandes, was wiederum eine bessere Zellkühlung zur Folge hat. Die thermische Isolationsschicht 423 kann beispielsweise durch Siebdrucken mit einer Strukturgröße im Bereich von 0,2 mm bis 10 mm, durch ein Klebeband, eine Folie oder durch Schablonendruck realisiert werden.

Gemäß einem weiteren Ausführungsbeispiel weist die thermische Isolationsschicht 423 zum eine ortsabhängige Variabilität in der Dicke auf und ist zudem ortsabhängig strukturiert, ist also durch eine Kombination der beiden zuvor beschriebenen Ausführungsbeispiele realisiert.

Als dritte Schicht kann die Toleranzausgleichsschicht 424 eingesetzt werden. Die Toleranzausgleichsschicht 424 weist typischerweise eine Dicke von 0,5 mm bis 1,5 mm auf, ist kompressibel und weist vorzugsweise eine Wärmeleitfähigkeit größer als 1.5 W/mK auf. Die Toleranzausgleichsschicht 424 kann durch eine durchgehende Beschichtung oder eine strukturierte Beschichtung realisiert sein. Solche Beschichtungen können beispielsweise durch Gießen, durch Dispensen, beispielsweise mittels einer Mehrfachdüse, durch Siebdrucken oder Schablonendrucken oder durch Aufvulkanisieren hergestellt werden. Auch kann die Toleranzausgleichsschicht 424 durch eine Wärmeleitfolie realisiert werden.

Als vierte Schicht kann die Heizschicht 422 eingesetzt werden. Die Heizschicht 422 ist optional. Eine Anordnung der Heizschicht 422 erfolgt oberhalb der elektrischen Isolation 421, vorzugsweise unterhalb der Toleranzausgleichsschicht 424. Oben kann dabei in Richtung der Batteriezellen 101 und unten in Richtung der Kühlplatte 103 bedeuten. Die Heizschicht 422 kann durch aufgedruckte Leiterbahnen, beispielsweise durch Siebdrucken hergestellt, oder durch eine Beschichtung mit PTC-Material und zusätzlich aufgedruckten Leiterbahnen realisiert werden.

Durch die genannten Schichten 421, 422, 423, 424 können die Temperaturgradienten zwischen den Zellen 101 auf gewünschte Weise reduziert werden.

Die beschriebenen Ausführungsbeispiele sind nur beispielhaft gewählt und können miteinander kombiniert werden.

## Patentansprüche

1. Thermische Übergangsvorrichtung (105) zum Herstellen eines thermischen Übergangs zwischen einem Energiespeicher (101) und einer Temperierplatte (103) zum Temperieren des Energiespeichers mit folgenden Merkmalen:
einer thermischen Isolationsschicht (423) aus einem mit ungleichmäßiger Materialstärke über die thermische Isolationsschicht verteilten Isolationsmaterial; und
einer Toleranzausgleichsschicht (424) aus einem kompressiblen Material zum Ausgleichen unterschiedlicher Materialstärken der thermischen Isolationsschicht.

2. Thermische Übergangsvorrichtung (105) gemäß Anspruch 1, bei der die thermische Isolationsschicht (423) benachbart zu der Toleranzausgleichsschicht (424) angeordnet ist.

3. Thermische Übergangsvorrichtung (105) gemäß einem der vorangegangenen Ansprüche, bei der die thermische Isolationsschicht (423) eine Wärmeleitfähigkeit von weniger als 0,6 W/mK und eine maximale Materialstärke von weniger als 600 µm aufweist und die Toleranzausgleichsschicht (424) eine Wärmeleitfähigkeit von mehr als 0,7 W/mK aufweist.

4. Thermische Übergangsvorrichtung (105) gemäß einem der vorangegangenen Ansprüche, bei der die thermische Isolationsschicht (423) einen ersten Bereich mit einer ersten Materialstärke, einen zweiten Bereich mit einer zweiten Materialstärke und einen dritten Bereich mit einer dritten Materialstärke aufweist, wobei der zweite Bereich zwischen dem ersten und dem dritten Bereich angeordnet ist.

5. Thermische Übergangsvorrichtung (105) gemäß einem der vorangegangenen Ansprüche, bei der die thermische Isolationsschicht (423) einen ersten Abschnitt und einen zweiten Abschnitt aufweist, wobei das Isolationsmaterial ausschließlich in dem ersten Abschnitt angeordnet ist.

6. Thermische Übergangsvorrichtung (105) gemäß Anspruch 5, bei der sich ein Flächenanteil des ersten Bereichs in Bezug zu einem Flächenanteil des zweiten Bereichs an der thermischen Isolationsschicht (423) entlang und/oder quer einer Haupterstreckungsrichtung (107) der thermischen Isolationsschicht verändert.

7. Thermische Übergangsvorrichtung (105) gemäß einem der vorangegangenen Ansprüche, mit einer elektrischen Isolationsschicht (421), die benachbart zu der Toleranzausgleichsschicht (424) oder benachbart zu der thermischen Isolationsschicht (423) angeordnet ist.

8. Thermische Übergangsvorrichtung (105) gemäß einem der vorangegangenen Ansprüche, mit einer Heizschicht (422), die benachbart zu der Toleranzausgleichsschicht (424) oder benachbart zu der thermischen Isolationsschicht (423) angeordnet ist.

9. Thermische Übergangsvorrichtung (105) gemäß einem der vorangegangenen Ansprüche, **dadurch gekennzeichnet, dass** die Toleranzausgleichsschicht aus einem kompressiblen Material ausgebildet ist, wobei das kompressible Material als Klebung mittels eines Klebers oder als Vergussmasse ausgebildet ist.

10. Temperierplatte zum Temperieren eines Energiespeichers (101), mit folgenden Merkmalen:
einer Strömungskanalschicht (103), die zumindest einen Strömungskanal zum Führen eines Fluids aufweist; und
einer thermischen Übergangsvorrichtung (105) gemäß einem der vorangegangenen Ansprüche, die mit der Strömungskanalschicht stapelförmig verbunden ist.

11. Energiespeichervorrichtung, mit folgenden Merkmalen:
einer Temperierplatte (103) gemäß Anspruch 10; und
einem Energiespeicher (101) der auf einer Oberfläche der thermischen Übergangsvorrichtung der Temperierplatte (105) angeordnet ist.

## Claims

1. A thermal transfer device (105) for producing a thermal transfer between an energy store (101) and a temperature-control plate (103) for the temperature control of the energy store with the following features:
a thermal insulation layer (423) made of an insulation material distributed unevenly over the thermal insulation layer; and
a tolerance compensating layer (424) made of a compressible material for compensating different material thicknesses of the thermal insulation layer.

2. The thermal transfer device (105) according to claim 1, wherein the thermal insulation layer (423) is arranged adjacent to the tolerance compensating layer (424).

3. The thermal transfer device (105) according to one of the preceding claims, wherein the thermal insulation layer (423) has a thermal conductivity of less than 0.6 W/mK and a maximum material thickness of less than 600 µm and the tolerance compensating layer (424) has a thermal conductivity greater than 0.7 W/mK.

4. The thermal transfer device (105) according to one of the preceding claims, wherein the thermal insulation layer (423) has a first region with a first material thickness, a second region with a second material thickness, and a third region with a third material thickness, wherein the second region is arranged between the first and third regions.

5. The thermal transfer device (105) according to one of the preceding claims, wherein the thermal insulation layer (423) has a first section and a second section, wherein the insulation material is arranged solely in the first section.

6. The thermal transfer device (105) according to claim 5, wherein a surface portion of the first region relative to a surface portion of the second region changes along the thermal insulation layer (423) and/or transverse to a main extension direction (107) of the thermal insulation layer.

7. The thermal transfer device (105) according to one of the preceding claims, having an electrical insulation layer (421), which is arranged adjacent to the tolerance compensating layer (424) or adjacent to the thermal insulation layer (423).

8. The thermal transfer device (105) according to one of the preceding claims, having a heating layer (422), which is arranged adjacent to the tolerance compensating layer (424) or adjacent to the thermal insulation layer (423).

9. The thermal transfer device (105) according to one of the preceding claims, **characterised in that** the tolerance compensating layer is made from a compressible material, wherein the compressible material is formed as bonding by means of an adhesive or as a sealing compound.

10. A temperature-control plate for the temperature control of an energy store (101), having the following features:
a flow channel layer (103), which has at least one flow channel for conducting a fluid; and
a thermal transfer device (105) according to one of the preceding claims, which is connected in the shape of a stack to the flow channel layer.

11. An energy storage device having the following features:
a temperature-control plate (103) according to claim 10; and
an energy store (101) which is arranged on a surface of the thermal transfer device of the temperature-control plate (105).

## Revendications

1. Dispositif de transfert thermique (105) servant à la réalisation d'un transfert thermique entre un accumulateur d'énergie (101) et une plaque de thermorégulation (103) servant à réguler la température de l'accumulateur d'énergie, ledit dispositif de transfert thermique ayant les caractéristiques suivantes :
une couche d'isolation thermique (423) se composant d'un matériau isolant réparti sur la couche d'isolation thermique, en ayant une épaisseur de matériau non uniforme ; et
une couche de compensation de tolérance (424) se composant d'un matériau compressible servant à compenser différentes épaisseurs de matériau de la couche d'isolation thermique.

2. Dispositif de transfert thermique (105) selon la revendication 1, dans lequel la couche d'isolation thermique (423) est disposée de façon contiguë à la couche de compensation de tolérance (424).

3. Dispositif de transfert thermique (105) selon l'une des revendications précédentes, dans lequel la couche d'isolation thermique (423) présente une conductivité thermique de moins de 0,6 W/mK et une épaisseur de matériau maximale de moins de 600 µm, et la couche de compensation de tolérance (424) présente une conductivité thermique de plus de 0,7 W/mK.

4. Dispositif de transfert thermique (105) selon l'une quelconque des revendications précédentes, dans lequel la couche d'isolation thermique (423) présente une première zone ayant une première épaisseur de matériau, une deuxième zone ayant une deuxième épaisseur de matériau et une troisième zone ayant une troisième épaisseur de matériau, où la deuxième zone est disposée entre la première et la troisième zone.

5. Dispositif de transfert thermique (105) selon l'une quelconque des revendications précédentes, dans lequel la couche d'isolation thermique (423) présente une première partie et une seconde partie, où le matériau isolant est disposé exclusivement dans la première partie.

6. Dispositif de transfert thermique (105) selon la revendication 5, dans lequel une proportion de surface de la première zone, relativement à une proportion de surface de la seconde zone, se modifie le long de la couche d'isolation thermique (423) et / ou de manière transversale par rapport à une direction d'étendue principale (107) de la couche d'isolation thermique.

7. Dispositif de transfert thermique (105) selon l'une quelconque des revendications précédentes, ayant une couche d'isolation électrique (421) qui est disposée de façon contiguë à la couche de compensation de tolérance (424) ou de façon contiguë à la couche d'isolation thermique (423).

8. Dispositif de transfert thermique (105) selon l'une quelconque des revendications précédentes, ayant une couche chauffante (422) qui est disposée de façon contiguë à la couche de compensation de tolérance (424) ou de façon contiguë à la couche d'isolation thermique (423).

9. Dispositif de transfert thermique (105) selon l'une quelconque des revendications précédentes, **caractérisé en ce que** la couche de compensation de tolérance est composée d'un matériau compressible, où le matériau compressible est configuré comme un collage réalisé au moyen d'une colle, ou bien configuré comme une masse de remplissage.

10. Plaque de thermorégulation servant à réguler la température d'un accumulateur d'énergie (101), ladite plaque de thermorégulation ayant les caractéristiques suivantes :
une couche de conduit d'écoulement (103) qui présente au moins un conduit d'écoulement servant au guidage d'un fluide ; et
un dispositif de transfert thermique (105) selon l'une quelconque des revendications précédentes, qui est assemblé en formant une pile avec la couche de conduit d'écoulement.

11. Dispositif accumulateur d'énergie ayant les caractéristiques suivantes :
une plaque de thermorégulation (103) selon la revendication 10 ; et
un accumulateur d'énergie (101) qui est disposé sur une surface du dispositif de transfert thermique de la plaque de thermorégulation (105).
